# FASCICULE DE BREVET EUROPEEN

(11) **EP 1 800 519 B1**
(45) Date de publication et mention de la délivrance du brevet: **14.04.2010**
(21) Numéro de dépôt: 05798536.8
(22) Date de dépôt: 24.08.2005
(51) Int. Cl.: H05B 3/26, H05B 3/06, F27D 11/02, F27D 1/00, F27D 17/00

(54) **FORGE ELECTRIQUE POUR CHAUFFER DES FERS A CHEVAL**
ELEKTRISCHER GLÜHOFEN ZUM ERHITZEN VON HUFEISEN
ELECTRIC FORGE FOR HEATING HORSE SHOES

(30) Priorité: 27.08.2004 FR 0409182
(43) Date de publication de la demande: 27.06.2007
(73) Titulaire: Oussalem, Jean, F-49000 Angers (FR)
(72) Inventeur: Oussalem, Jean, F-49000 Angers (FR)
(74) Mandataire: Pontet, Bernard
(86) Numéro de dépôt international: PCT/FR2005/002128
(87) Numéro de publication internationale: WO 2006/027457

(56) Documents cités:
- GB-A- 881 984
- US-A- 3 610 881
- US-A- 3 786 162

## Description

La présente invention concerne un dispositif de chauffage par résistance électrique, destiné à chauffer une masse métallique telle que un ou des fers à cheval et analogue, à une température suffisante pour être forgés (environ 1000°C), et en un temps suffisamment court pour répondre aux exigences du métier, notamment, de maréchal-ferrant.

Le document GB-A-881 984 sur lequel se base le préambule de la revendication 1 montre un dispositif de chauffage par résistance électrique. Un tel dispositif, manque de modularité.

Traditionnellement, le chauffage des fers est effectué dans une forge à gaz transportable. Du fait que le ferrage a lieu à domicile, le maréchal-ferrant est obligé de transporter tout son matériel, à savoir :
- forge, enclume et outillage,
- la gamme des différentes tailles de fers,
- matériel électroportatif divers,
- deux bouteilles de gaz (nécessité de disposer d'une recharge).
Le transport de bouteilles de gaz dans un véhicule présente des risques certains, qui ne sont couverts par les assurances qu'à condition d'être équipé d'un caisson étanche, robuste, de dimensions et d'épaisseurs données et fixé à l'extérieur du véhicule. Une telle mise aux normes sécuritaires s'averre inadaptée pour la majorité des utilisateurs qui disposent de véhicules légers de type fourgonnettes. D'autant plus qu'elle représente un coût prohibitif. Ainsi dans la réalité, seule une infime minorité de maréchaux-ferrant exerce en toute conformité.
Les forges à gaz présentent d'autres inconvénients majeurs qui viennent s'ajouter à des conditions de travail déjà difficiles. Comme le bruit généré par les brûleurs qui stresse certains chevaux au point d'empêcher toute intervention.
Lorsqu'il faut sortir les fers du feu, la chaleur extrême provoque des brûlures aux mains et aux bras; l'emploi de gants étant difficilement compatible avec l'activité.
La flamme de la forge à gaz est oxydante. A forte température, elle produit rapidement beaucoup de batirures (vapeurs d'oxydes de fer). L'exposition prolongée à ces dégagements gazeux favorise chez certains des complications respiratoires et cardio-vasculaires.

D'un point de vue économique, le bilan énergétique d'une forge à gaz dans sa conception actuelle peut être considéré de désastreux. En effet, le principe même de fonctionnement impose l'évacuation continue des gaz brûlés donc de la chaleur. Ainsi, sur la totalité de l'énergie consommée, la part absorbée réellement par la charge n'excède guère 10 %.

Le dispositif selon l'invention permet de remédier à ces nombreux inconvénients en utilisant un chauffage par résistance électrique dont le rendement est proche de 100% (les pertes étant essentiellement de nature thermique)
Le bilan énergétique du dispositif électrique est sans conteste bien supérieur. L'ensemble résistance / fer étant thermiquement isolé par des matériaux isolants de faible densité, une près grande part de l'énergie est transmise à la charge.
L'utilisateur n'est plus obligé de transporter de bouteilles de gaz puisqu'il dispose de l'énergie électrique disponible directement sur le lieu d'intervention. De plus et contrairement au gaz, le coût énergétique est à la charge du client.
A titre comparatif, chauffer les fers électriquement revient environ 5 fois moins cher qu'avec le gaz.

Le principe de l'invention consiste à substituer l'énergie électrique au gaz, en utilisant une résistance électrique haute température (1000 à 1200°C), disposée près du fer à chauffer. Les exigences du métier impliquant d'atteindre la température requise en un temps de l'ordre de quelques minutes et avec une source électrique limitée (220 V - 16 A), le rendement devra être optimisé au maximum.
Pour arriver à un résultat satisfaisant, le fer et la résistance sont contenus dans un espace avantageusement restreint, et disposés au plus près l'un de l'autre sans entrer en contact. Ledit espace est délimité par un matériau isolant de faible densité de manière à absorber le minimum de chaleur, contient un volume constitué, notamment, d'air servant au transfert de la chaleur par convection et rayonnement. Les parois internes dudit espace présentent une surface réflective de manière à optimiser les échanges thermiques par rayonnements en concentrant ces derniers.
En outre, le profil des parois est déterminé de manière à optimiser les courants de convection tout autour de la résistance et du fer.

Les dessins annexés illustrent l'invention :

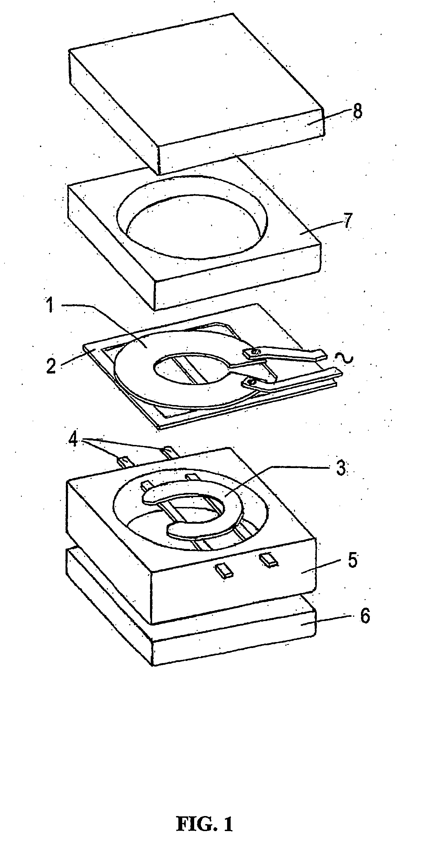

La figure 1 représente en perspective le dispositif de l'invention.

En référence à la figure 1, le dispositif comporte une résistance électrique (1) posée sur un support électriquement isolant (2), qui est approchée du fer à cheval (3) posé sur un support (4). Les éléments (5) et (7) empilés forment un espace restreint, fermé par les éléments (6) et (8). L'espace ainsi constitué contient la résistance électrique (1) et le fer à cheval (3). Le gaz, notamment de l'air, également contenu dans ledit espace sert au transport de la chaleur de la résistance vers la masse à chauffer.
Afin d'optimiser les mouvements de convection à l'origine du transfert de chaleur, le volume délimité par le matériau isolant est déterminé de manière avantageusement restreinte et avec un profil spécifique. En outre, les parois internes dudit volume présentent une surface réflective destinée à amplifier le rayonnement thermique afin d'optimiser le transfert de la chaleur.
Les matériaux isolants utilisés sont de faible densité afin d'absorber un minimum de chaleur et offrir un meilleur rendement.

Un capteur thermique, par exemple de type thermocouple, permet une régulation de la température en interrompant l'alimentation une fois la température atteinte. Dans le cas de chauffage de fers en aluminium, par exemple, où la température requise est plus basse, un commutateur permet de basculer sur un circuit intermédiaire de commande de la régulation.

Le dispositif selon l'invention est notamment destiné aux professionnels de la maréchalerie.

## Revendications

1. Dispositif de chauffage par résistance destiné à chauffer une masse métallique d'au moins un fer à cheval (3) ou analogues, comportant une résistance électrique (1) posée sur un support électriquement isolant (2), un support (4) pour ledit fer à cheval (3) et des éléments empilés (5, 7) en matériau isolant, **caractérisé en ce que** lesdits éléments empilés en matériau isolant (5,7) délimitent un volume dans lequel sont disposés la résistance électrique (1) et le support (4) pour fer à cheval, et que lesdits éléments empilés (5, 7) sont fermés par d'autres éléments isolants empilés (6, 8).

2. Dispositif de chauffage par résistance selon la revendication 1, **caractérisé en ce que** les parois intérieures dudit volume présentent une surface réfléchissante destinée à optimiser les échanges thermiques par rayonnements.

3. Dispositif de chauffage par résistance selon la revendication 1 ou 2, **caractérisé en ce que** le profil intérieur du volume interne délimité par le matériau isolant est déterminé de manière à optimiser les courants de convection autour de la masse à chauffer.

4. Dispositif de chauffage par résistance selon l'une quelconque des revendications précédentes, **caractérisé en ce que** le matériau isolant présente une densité la plus faible possible de manière à minimiser les pertes thermiques.

5. Dispositif de chauffage par résistance selon l'une quelconque des revendications précédentes, **caractérisé en ce qu'**il comporte un capteur thermique destiné à couper l'alimentation électrique pour réguler la température de chauffage.

6. Dispositif de chauffage par résistance selon la revendication 5, **caractérisé en ce qu'**il est pourvu d'un commutateur permettant de basculer sur un circuit intermédiaire de commande de la régulation.

## Claims

1. A resistance heating device intended to heat a metal mass of at least one horseshoe (3) or the like, comprising an electric resistor (1), placed on an electrically insulating support (2), a support (4) for said horseshoe (3), and stacked elements (5, 7) made from insulating material, **characterised in that** said stacked elements (5, 7) made from insulating material delimit a volume in which the electric resistor (1) and the support (4) for horseshoe are disposed, and **in that** said stacked elements (5, 7) are closed by further stacked insulating elements (6, 8).

2. A resistance heating device according to claim 1, **characterised in that** the internal walls of said volume have a reflective surface intended to optimise the heat exchanges by radiation.

3. A resistance heating device according to claim 1 or 2, **characterised in that** the internal profile of the internal volume delimited by the insulating material is determined so as to optimise the convection flows around the mass to be heated.

4. A resistance heating device according one of the foregoing claims, **characterised in that** the insulating material has a density as low as possible so as to minimise the thermal losses.

5. A resistance heating device according one of the foregoing claims, **characterised in that** it comprises a thermal sensor intended to cut off the electrical supply in order to regulate the heating temperature.

6. A resistance heating device according to claim 5, **characterised in that** it is provided with a switch for switching onto an intermediate circuit controlling the regulation.

## Patentansprüche

1. Widerstandheizvorrichtung zum erhitzen einer metallischen Masse mindestens eines Hufeisens (3) oder ähnlichen, mit einem auf einem elektrisch isolierenden Träger (2) gelegten elektrischen Widerstand (1), mit einem Träger (4) für das Hufeisen (3) und mit gestapelten Elementen (5, 7) aus einem isolierenden Material, **dadurch gekennzeichnet, dass** die gestapelte Elemente aus isolierendem Material (5, 7) ein Volumen begrenzen, in dem der elektrische Widerstand (1) und der Träger (4) für Hufeisen angeordnet sind, und dass die gestapelte Elemente (5, 7) durch andere gestapelte Elemente (6, 8) geschlossen sind.

2. Widerstandheizvorrichtung nach Anspruch 1, **dadurch gekennzeichnet, dass** zur Optimierung des Wärmeaustausches durch Strahlung die Innenwände des Volumens eine reflektierende Fläche aufweisen.

3. Widerstandheizvorrichtung nach Anspruch 1 oder 2, **dadurch gekennzeichnet, dass** das Innenprofil des vom isolierenden Material begrenzten Innenvolumens so bestimmt ist, um die Konvektionsströme um die zu erhitzende Masse zu optimieren.

4. Widerstandheizvorrichtung nach einem der vorstehenden Ansprüche, **dadurch gekennzeichnet, dass** das isolierende Material eine so kleine wie möglich Dichte aufweist, um den Wärmeverlust zu minimisieren.

5. - Widerstandheizvorrichtung nach einem der vorstehenden Ansprüche, **dadurch gekennzeichnet, dass** sie einen Wärmesensor zum Ausschalten der Stromzufuhr aufweist, um die Heiztemperatur zu regulieren.

6. Widerstandheizvorrichtung nach Anspruch 5, **dadurch gekennzeichnet, dass** sie mit einem Einschalter versehen ist, der es erlaubt, eine Zwischenschaltung zum Steuern der Regelung einzuschalten.
